# EUROPEAN PATENT APPLICATION

(11) **EP 4 682 069 A1**
(43) Date of publication of application: **21.01.2026**
(21) Application number: 24189225.6
(22) Date of filing: 17.07.2024
(51) Int. Cl.: B65D 5/74, B65D 47/08, B65D 47/10, B65D 41/48, B29C 45/00

(54) **POURING ELEMENT FOR CARDBOARD/PLASTIC COMPOSITE PACKAGES**

(71) Applicant: SIG Services AG, 8212 Neuhausen am Rheinfall (CH)
(72) Inventor: KOLLER, David, 5442 Fislisbach (CH)
(74) Representative: Cohausz & Florack

(57) **Abstract**

The invention relates to a pouring element (1,30) for cardboard/plastic composite packages comprising a spout body (2),and a flip cap (3,37), wherein the spout body (2) comprises a circumferential fastening flange (4) for fastening the spout body (2) to the composite package and a pouring tube (5,39) extending from the fastening flange (4) and surrounding a longitudinal axis (A), wherein the flip cap (3,37) comprises a closure element (6,31,C) closing the pouring tube (5,39) in a closed state of the pouring element (1,30), wherein the flip cap (3,37) comprises an anchor element (8,AE) connecting to a rear side of the closure element (6,31,C) and configured to permanently attach the flip cap (3,37) to the spout body (2) in a swiveling manner, and wherein the flip cap (3,37) comprises a grip portion (7,35,G) assigned to a front side of the closure element (6,31,C), opposite the rear side regarding the longitudinal axis (A), for gripping the flip cap (3,37) for opening of the pouring element (1,30). In order to achieve the object, according to which the pouring element can be easily and more smoothly opened without a disproportionate risk of an unintentional opening of the pouring element, the closure element (6,31,C) comprises a stabilization section (21,33,S) and at least one thinned-out section (19,32,T) arranged between the stabilization section (21,33,S) and the grip portion (7,35,G) and/or the anchor element (8,AE), wherein the axial thickness of the thinned-out section (19,32,T) is not more than 90% of the axial thickness of the stabilization section (21,33,S) of the closure element (6,31,C).

## Description

The invention relates to a pouring element for cardboard/plastic composite packages comprising a spout body and a flip cap, wherein the spout body comprises a circumferential fastening flange for fastening the spout body to the composite package and a pouring tube extending from the fastening flange and surrounding a longitudinal axis, wherein the flip cap comprises a closure element closing the pouring tube in a closed state of the pouring element, wherein the flip cap comprises an anchor element connecting to a rear side of the closure element and configured to permanently attach the flip cap to the spout body in a swiveling manner and wherein the flip cap comprises a grip portion assigned to the front side of the closure element, opposite the rear side regarding the longitudinal axis, for gripping the flip cap for opening the pouring element.

Cardboard/plastic composite packages have long been used for packaging beverages and other foodstuff and consist of different package materials in the form of a packaging laminate comprising a cardboard layer and outer, in particular thermoplastic, plastic layers, for example polyethylene (PE). The cardboard gives the package material sufficient stability to form packages that can be easily handled and stacked, for example. The plastic layers protect the cardboard from moisture and the products, especially food, from taking up undesirable substances from the package material. In addition, further layers such as diffusion protection layers, if necessary an aluminum layer, can be provided to prevent diffusion of oxygen and other gases through the package material.

The cardboard/plastic composite packages are preferably formed from package sleeves which are open at opposing longitudinal ends and have been produced from package material blanks, in particular by sealing the longitudinal edges of the package material blanks to one another. The package sleeves are folded and sealed at a longitudinal bottom end. This results in a semifinished package body open on one side, which is then filled with a product such as foodstuff. Thereafter, the filled package body is folded and sealed at an upper end.

Prior to filling the package body or after closing the package a pouring element can be attached to the package material so that pourable products can easily and conveniently be poured out of the package. By doing so, cumbersome opening of the packages can be avoided. Pouring elements generally comprise a spout body with a circumferential fastening flange for fastening the spout body to a composite package and a pouring tube for pouring pourable content out of the composite package, whereby the pouring tube extends from the fastening flange upward and away from the package. The fastening flange is arranged perpendicular to the pouring tube and extends outwardly from the pouring tube, which has a cross section that is often circular but can also be e.g. teardrop-shaped or oval. The pouring tube can be closed by a closure element provided by a flip cap which is connected via a anchor element to the spout body. In addition, the flip cap can be circumferentially connected to the spout body, in particular the pouring tube, by a breakable connecting portion, that is liquid tight in order to avoid leakage of product contained in the package.

However, for pouring out said product, the breakable connection gets broken when opening the pouring element for the first time. In the opened state the flip cap is held open via the anchor element to the spout body and the product can be poured out of the package through the pouring tube. In case only part of the product is poured out, the pouring element can be re-closed. In the closed state, i.e. in the initially closed state as well in the re-closed state, a closure element of the flip cap closes the outlet of the pouring tube in order to avoid leakage of content from the package.

The anchor element connects to a rear side of the closure element. At the front side of the flip cap and, therefore, assigned to the front side of the closure element, a grip portion is provided. The grip portion can be gripped by a user in order to open the pouring element either initially, i.e. for the first time, or for re-opening the re-closed pouring element later on.

The package typically comprises a hole in the package material around which the fastening flange is applied to the package material, in particular by sealing the fastening flange on the outside to the package material. Thus, the pouring element closes the hole provided in the package material. In addition, the hole provided in the package material can also be closed by a cover layer sealed to the package body in the vicinity of the hole. Said cover layer needs to be removed at least partially for initially opening the package body. This can be performed together with initially opening the pouring element without the need for separate handling of the cover layer itself, in particular if the cover layer is connected to the closure element such that the cover layer is at least partially removed by displacing the closure element from a closed state into an opened state. As an alternative the cover layer can be removed after opening of the pouring element. In this case the cover layer can have a gripping member for gripping and tearing the cover layer at least in part by a user. The cover layer can also be produced as a single piece together with the rest of the spout body to which it is connected by a thinned-out, breakable section.

To avoid unintentional opening of the pouring element, the flip cap and the pouring tube can be connected such that substantial forces have to be applied for breaking the connection portion between flip cap and pouring tube. However, the connection between the flip cap and the pouring tube should not be designed too rigid so that the pouring element can still be easily opened. The same is true if this connection is indirect as explained above in the case of a cover layer. Opening forces can also be higher because of lateral walls adjacent to the inside and/or outside of the pouring tube.

Therefore, the present invention is based on the object of designing and further developing the pouring element of the type mentioned at the beginning and explained in more detail above in such a way that the pouring element can be easily and more smoothly opened without a disproportionate risk of an unintentional opening of the pouring element.

Said object is achieved by a pouring element according to the preamble of claim 1 in that the closure element comprises a stabilization section and at least one thinned-out section arranged between the stabilization section and the grip portion and/or the anchor element, wherein the axial thickness of the thinned-out section is not more than 90% of the axial thickness of the stabilization section of the closure element.

By thinning out the material thickness of the closure element in the at least one thinned-out section, the closure element can be bent more easily in the respective area when the pouring element is opened, in particular for the first time. As a result, the opening forces are partially focused on the bended area of the pouring element, so that, for example, high stress can be provided in a connection portion between the flip cap and the pouring tube, said connection portion can be liquid tight but breakable due to respective stress during opening. In consequence, in the initial stage of the opening process little force is needed by the user to open the pouring element adjacent to the bended area of the flip can. Subsequently, the opening process transitions to the stabilization section and further on. The opening forces are then focused in the not yet opened part of the closure element directly abutting the already opened section. This allows for a staggered force distribution over time which leads to a smoother opening process compared to the prior art where the comparatively stiff closure element leads to a shorter but higher force peak.

It can be advantageous that the flip cap is circumferentially connected to the pouring tube of the spout body by a breakable, liquid tight connecting portion. The connecting portion can for example be adjacent to the upper and/or free end of the pouring tube or adjacent to the inner wall of the pouring tube. In the latter case the flip cap, in particular the closure element can comprise an engagement wall, engaging into the pouring tube in the closed state of the flip cap. In these cases, the aforementioned advantages are even more impactful since the connecting portion needs to be peeled out of the pouring tube during opening.

For initially breaking the connecting portion or tearing out an attached cover layer usually high opening forces are necessary. After the initial tear, further opening of the pouring element usually needs less opening force since high stress is applied to the edges of the torn-open portion. However, bending of the closure element helps focusing stress on the edges of the still unbroken part at each state during opening of the pouring element.

Opening of the pouring element can be further facilitated in case the grip portion protrudes outwardly with respect to the flip cap. In this case, the grip portion can be easily gripped by a user. Further, the user can easily apply higher opening forces to the flip cap by way of the grip portion. As an alternative or in addition the grip portion can also comprise a pulling ring which can be easily gripped by the user, who for example can insert a finger in the puling ring depending on its design. By pulling the pulling ring, the flip cap gets bent and peeled off from the pouring tube. Other shapes of the grip portion are possible as well, such as a grip feature on an outside wall to increase friction by adding knobs, ribs or a second material with a higher coefficient of friction.

The grip portion and the anchor element can preferably be assigned to at least essentially diametrically opposite parts of the closure element. This creates a pouring element that can be easily and equally opened by left- and right-handed people. However, it is not necessary for the anchor element to be connected to the closure element directly opposite to the grip portion. Irrespective of its position, the anchor element should preferably be so long that the flip cap in the open state can be moved away from the pouring tube in a way that the flip cap does not get in contact with the content of the package during pouring.

Moreover, the anchor element can have different shapes and can be mounted directly or indirectly to the pouring tube or to the fastening flange. This connection of the flip cap and the spout body, however, is such that the flip cap cannot get lost accidentally.

The pouring tube defines a central longitudinal axis of the pouring tube, whereby the pouring tube extends surrounds said longitudinal axis. Thus, the intersection between the central longitudinal axis and the closure element can define the center of the closure element, so that the front half of the closure element is arranged between the center of the closure element and the grip portion, whereas the rear half of the closure element is arranged between the center of the closure element and the anchor element.

The at least one thinned-out section can be located in the front half and/or the back half of the closure element. Where precisely the at least one thinned-out section is located can depend on other parameters. However, it is generally preferred that the thinned-out portion is arranged at the front edge of the closure element next to the grip portion and/or at the back edge near the anchor element. To provide a preferred stiffness a rib portion can be provided between the grip portion and the thinned-out section. It is not necessary that the thinned-out section extends to the center of the closure element. In many cases this will not be preferred since the flip cap should provide for sufficient stiffness and sufficient flexibility at the same time. Because of these requirements it can be preferred that the stabilization section of the closure element extends at least over the central part of the closure element. This is especially pertinent if a smaller thinned-out section is present both in the front and back half. If thinned-out sections are only present either in the front or back half, the stabilization section can extend from the other half over the center of the closure element, to provide for sufficient stiffness of the flip cap. However, it is only necessary that the stabilization section is arranged somewhere on the opposite side of the thinned-out section in these cases. Any thinned-out section mentioned here could also be partitioned into multiple such sections.

In a first particularly preferred embodiment of the pouring element the thickness of at least one thinned-out section, preferably arranged at least in part in the front half of the closure element, is not more than 75%, preferably not more than 50%, of the thickness of the stabilization section of the closure element, preferably arranged on opposite side of the thinned-out section to the grip portion. The thinner the thinned-out portion is the easier it is to bend the closure element in the thinned-out portion during opening of the pouring element. As a result, the mechanical stress can be focused on a small part of the connecting portion, preferably on the front end of the connecting portion adjacent to the grip portion so that the connection portion breaks very easily and reliably where the mechanical stress is focused.

As an alternative or in addition the stabilization section can be arranged between the thinned-out section and the anchor element. In this part of the closure element the stabilization section can very effectively provide for sufficient stiffness of the flip cap without impeding the opening of the pouring element.

To ensure a secure and reliable opening of the pouring element, the at least one thinned-out section and the stabilization section can be arranged in a way such that a straight connecting line extending from the grip portion to the anchor element intersects the thinned-out section and the stabilization section one after the other. The thinned-out section is then arranged towards the grip portion whereas the stabilization section is arranged towards the anchor element. It may be further preferred that the connecting line defines a plane which can be regarded at least essentially as a plane of symmetry with respect to the closure element, the flip cap and/or the pouring element as such. The plane of symmetry would then be preferably parallel to the central longitudinal axis of the pouring tube, whereby the central longitudinal axis can be arranged in said plane of symmetry. However, it would not be necessary to provide for an exact symmetry in a mathematical sense.

For proper opening of the pouring element, it may be beneficial to provide for a stabilization section with a more or less constant thickness and a thinned-out section with a more or less constant thickness. It can be suitable to provide for at least two areas of different thickness or gradual changes in thickness within the thinned-out section. As a result, the thickness of the closure element may change in steps from the stabilization section to the thinned-out section, even if respective sections are not directly adjacent to each other. In the section between the stabilization section and the thinned-out section thickness of the closure element can constantly change, so that no step in thickness of the closure element is present between the stabilization section and the thinned-out section.

However, it is also possible that the thickness of the stabilization section, the thickness of the thinned-out section and/or a section between the stabilization section and the thinned-out section constantly changes. It is even possible, that the thickness of the closure element is constantly changing over at least essentially the whole distance between the anchor element and the grip portion.

To improve opening of the pouring element it can be suitable to reduce the thickness from an area next to the anchor element in more than one step to an area next to the grip portion. In such a case bending of the flip cap during opening can be improved by providing at least one intermediate section at least partly between the thinned-out section and the stabilization section. The thickness of at least one intermediate section can be equal to not more than 90%, preferably not more than 85%, in particular not more than 75% of the thickness of the stabilization section. As an alternative or in addition, the thickness of the thinned-out section can be equal to not more than 90%, preferably not more than 80%, in particular not more than 65% of the thickness of the at least one intermediate section. There can also be more than one intermediate section. However, with increasing numbers of intermediate sections complexity and cost of the pouring element tend to increase.

Opening of the pouring element can also be improved by aligning the at least one thinned-out section, the intermediate section and the at least one stabilization section across the closure element so that a straight connecting line extending from the grip portion to the anchor element intersects the thinned-out section, the intermediate section and the stabilization section one after the other. The thinned-out section is assigned to the grip portion, whereas the stabilization section is assigned to the anchor element and the intermediate section is arranged between the thinned-out section and the stabilization section. However, it can be advantageous if the intermediate section is assigned closer to the grip portion than to the anchor element. In some cases, good results are achieved, when the thinned-out section and the intermediate section are arranged at least essentially in the front half of the closure element.

Regarding the connection line, it is advantageous if the connection line intersects the center of the closure element arranged in the stabilization section or in the intermediate section. Because of this the thinned-out section of the closure element will be way more flexible than the stabilization section or the intermediate section, which in general is beneficial for an easy and reliable opening of the pouring element. It this respect, it may be advantageous if the connection line intersects the longitudinal axis in the stabilization section or in the intermediate section.

The closure element can have a circumferential outer rim with at least essentially constant thickness. Said thickness is larger than the thickness of the thinned-out section and/or at least essentially similar to the thickness of the stabilization section. In this case, the closure element can provide sufficient stiffness and/or be opened in a reliable manner.

As an alternative or in addition the stabilization section can extend to both outer edges of the closure element arranged between the front side and rear side. The stabilization section can than function as cross bar, providing sufficient stiffness without impairing opening of the pouring element.

Preferable opening properties can for example be achieved in case that all thinned-out sections combined make up 10% to 50%, preferably 20% to 35%, of the total top surface area of the closure element.

To reduce complexity of the closure element, it can be suitable if the lower surface of the closure element closing the pouring tube is at least essentially plane. This means that the thinned-out sections are arranged on the top surface. In case of a cover layer arranged inside the pouring tube which is to be opened together with the closure element, this allows for an easy connection by welding the two together. Alternatively, in case of an "open system" that is filled aseptically, this ensures that the sterilization agent reaches the whole inner surface easily and is equally distributed across it.

For many applications it can be advantageous that the closure element has a circumferential wall section extending downwards into the pouring tube. The wall section can be inserted into the pouring tube, such that the outer side of the circumferential wall abuts the pouring tube on its inside. As a result, the circumferential wall section of the closure element seals the pouring tube and can be held at least friction-locked if not positively in the pouring tube. Further, the connecting portion can be provided between the inside of the pouring tube and the outside of the circumferential wall section. Additionally, the wall section can extend a shorter distance into the pouring tube near the grip portion compared to the rest of the circumference. This further lowers the initial force needed at the very start of the opening process and allows for easier removal of the closure element out of the pouring tube despite the strong bending of the front half of the closure element.

The circumferential wall section can be arranged circumferentially to the lower surface of the closure element. Thus, the lower surface can be essentially flat even though the circumferential wall section protrudes from the lower surface downwards in the closed state of the flip cap. This can also lead to the fact that the thickness of the thinned-out section and/or of the at least intermediate section is not impeded by the circumferential wall section of the closure element. Thinned-out section and intermediate section can be arranged within the circumferential wall section.

In order to prevent leakage prior to initial opening the flip cap can be circumferentially connected to the spout body by a breakable, liquid-tight connection portion. Said connection portion can be configured to break during initial opening of the pouring element.

The anchor element can comprise a hinge member for swiveling the closure element. The closure element can be designed to be swiveled around a stable axis und/or from an open position for pouring product out of the pouring tube to a closed position for closing the pouring tube. Said clearly defined hinge member can facilitate handling of the closure element and prevent contact between product and closure element when pouring the product out of the package.

The anchor element can be attached directly to the spout body. This simplifies the design of the pouring element. Further, the spout body and the flip cap can be made in a single piece, for example by way of injection molding. This can potentially reduce costs for production of pouring elements at a large scale.

Further, the anchor element can be fixedly mounted to the pouring tube or the fastening flange. It is also possible that the anchor element is sealed to the pouring tube or the fastening flange. However, the closure element is securely fastened to the spout body. To facilitate manufacturing of the pouring element it may be advantageous if the anchor element is positively held on the outside of the pouring tube in a direction parallel to the pouring tube and directed to the upper end of the pouring tube. Then, the flip cap cannot accidentally be removed from the pouring tube. In the latter case, the anchor element can comprise a holding ring wrapped around the outside of the pouring tube. The holding ring can engage in a recess of the pouring tube. The holding ring can also be placed beneath a rib member on the outside of the pouring tube. The recess or the rib member may or may not fully extend circumferentially around the outside of the pouring tube. The anchor element is then positively held on the pouring tube, which prevents a user from pulling off the flip cap from the pouring tube. In the direction of the package body the anchor element can be positively held by the fastening flange or by a rib member provided below the anchor element. In the latter case the anchor element can be aligned with the pouring tube by rip members.

High opening forces can be more easily applied when the grip portion comprises a pulling ring. Preferably, the pulling ring is attached at the front side of the closure element. The pulling ring can be connected to adjacent parts of the flip cap via breakable bridges, configured to break during first opening of the pouring element. Prior to initial opening of the pouring element the pulling ring does not impede handling of the composite package. Further, due to the bridges it is less likely that the flip cap is accidentally opened. This is especially the case when the puling ring is initially positioned circumferentially around the closure element. For opening the flip cap the bridges have to be broken first. Thereafter, the pulling ring can be swiveled with respect to the closure element, in particular upwards or away from the pouring tube. However, the pulling ring stays fixedly connected to the flip cap, whereby this connection is assigned to the front side of the closure element.

In a preferred embodiment the pulling ring is configured such that a user can insert at least one finger into the pulling ring. As an alternative or additionally the pulling ring is configured to be pulled backwards in the direction of the anchor element to initiate opening of the pouring element.

The advantages of the features discussed above with respect to initial opening of the pouring element in principle also apply for re-opening of the pouring element. When re-opening the pouring element any breakable elements have already been broken. However, a re-closed pouring element is at least frictionally if not positively secured in and/or on the spout body. In order to loosen this connection during re-opening, bending of the flip cap as during initial opening is still advantageous. Thus, an easier and more reliable re-opening can be ensured, without the need for applying excessive forces by the user. During re-opening mechanical stress can be focused in certain parts of the connection between the flip cap and the spout body, so that in said parts easy disengagement is possible. In this respect it is to note, that it is especially preferred that the flip cap engages in the pouring tube and is held in the pouring tube frictionally or positively in the pouring tube. However, this is not necessary.

Further, even in the thinned-out section the thickness of the closure element should not be too low in order to securely close the spout body. In addition, the closure element could easily break during opening of the pouring element in the thinned-out section if the thinned-out section is designed too thin. Thus, a minimal thickness of the thinned-out section should preferably not be less than 0,3 mm, preferably not less than 0,4 mm, more preferably not less than 0,5 mm, in particular not less than 0,6 mm.

The thickness of the stabilization section should not be too low in order to fulfill a sufficient stabilizing function. However, the stabilizing section should still be sufficiently flexible so as not to hinder opening. In consequence, the thickness of the stabilization section should preferably be at least 0,7 mm, preferably at least 0,8 mm, more preferably at least 0,9 mm, in particular at least 1,0 mm.

Based on the above it is further preferred, if the thickness of the intermediate section is somewhere between the thickness of the thinned-out section and the stabilization section. In this respect, the thickness of the intermediate section can preferably exceed the thickness of the thinned-out section by at least 0,1 mm, more preferably by at least 0,2 mm, in particular by at least 0,3 mm. However, the thickness of the stabilization section can preferably exceed the thickness of the intermediate section by at least 0,1 mm, more preferably by at least 0,2 mm, in particular by at least 0,3 mm. This may ensure that the mechanical properties of the different sections are sufficiently different when compared to each other.

However, in certain embodiments it can also be preferrable, if there is a reinforcing section in a middle area of the closure element, with has a thickness of more than 1 mm, preferably of at least 1,2 mm, more preferably of at least 1,4 mm, in particular of at least 1,7mm, but preferably not more than 2,0 mm. Said reinforcing section can have a crossbeam like shape.

As an alternative the flip cap and/or the closure element can have a circumferential outer rim portion with at least essentially constant thickness, which is greater than the thickness of the thinned-out portion and/or at least essentially similar to the thickness of the stabilization section. Thus, sufficient stability and convenient gripping of the flip cap can be easily provided.

Moreover, the central longitudinal axis of the pouring tube can be aligned with the injection point of the flip cap, which is generated by injection molding the flip cap and/or the pouring element due to injection of thermoplastic material into the mold for forming the flip cap and/or the pouring element in said mold. In this respect it may be further preferred if star-shaped flow ribs are provided with the injection point in the center of the star-shaped ribs. These ribs serve distribution of the thermoplastic material in the mold during injection molding despite the present thinned-out sections which generally impede material flow and distribution. These ribs, however, should not notably impede opening of the pouring element. Alternatively, it is also advantageous for the same reasons if the transition zones between different sections roughly align along such lines from the outside of the closure element towards the central injection point. For example, this could be the transition from a thinned-out section to an intermediate or directly to a stabilization section.

The invention is explained in more detail below with reference to a drawing showing examples of embodiments. The drawing shows
- Fig. 1A-C: a first pouring element according to the invention in perspective views and in a top view,
- Fig. 2A-B: pouring element form Fig. 1 in a closed state in a side view and a corresponding sectional view,
- Fig, 3A-B: pouring element form Fig. 1 in a slightly opened state in a side view and a corresponding sectional view,
- Fig. 4A-B: pouring element form Fig. 1 in a further opened state in a side view and a corresponding sectional view,
- Fig. 5: pouring element form Fig. 1 in an opened state in a side view,
- Fig. 6A-C: a second pouring element according to the invention in perspective views,
- Fig. 7A-K: further pouring elements according to the invention in top views.

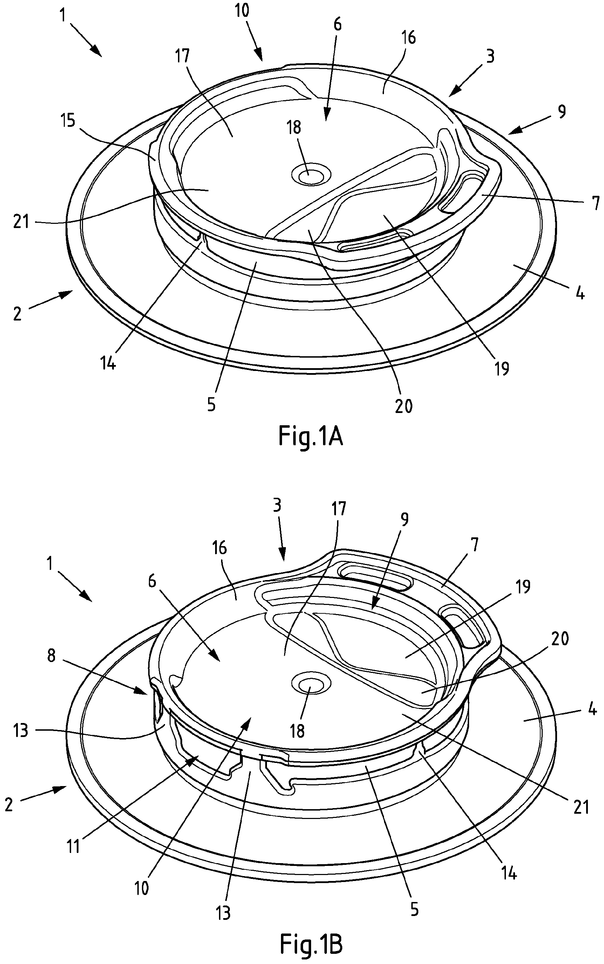

In Fig. 1A-C a pouring element 1 is shown, which is in its closed state. The pouring element 1, which is configured to be attached to a cardboard/plastic composite package comprises a spout body 2 and a flip cap 3. The spout body 2 has a fastening flange 4 for fastening to the cardboard/plastic composite package, in particular circumferentially to a hole in the cardboard/plastic composite package material. The pouring element 1 is preferably made from thermoplastic material, further preferably by injection molding. Thus, the fastening flange 4 can preferably be fastened to the outer thermoplastic layer of the cardboard/plastic composite package by sealing.

The spout body 2 further comprises a pouring tube 5 for pouring product out of the package and through the pouring element 1 respectively. The pouring tube 5 extends from the fastening flange 4 outwards. The pouring tube 5 is closed by a closure element 6 forming a central part of the flip cap 3. Said flip cap 3 additionally comprises a grip portion 7 and an anchor element 8. The grip portion 7 protrudes to the side and is configured to be gripped by a user. The user can pull the flip cap 3 up and back in the direction of the anchor element 8, swiveling around it, to open the pouring element 1. The grip portion 7 is assigned to a front half 9 of the closure element 6, whereas the anchor element 8 is assigned to a rear half 10 of the closure element 6.

The shown and in this respect preferred pouring element 1 comprises a anchor element 8 having a hinge member 11 and a holding ring 12 wrapped around the outside of the pouring tube 5. The holding ring 12 holds the flip cap 3 in an opened state securely on the pouring tube 5. The hinge member 11 comprises in the shown embodiment two separate hinges 13 connecting the holding ring 12 to the closure element 6. Therefore, the closure element 6 can be swiveled about the hinge member 11 into an opened position away from the pouring tube 5 which allows pouring the product out of the package and through the pouring tube 5. The closure element 6 is further connected to the holding ring 12 of the anchor element via breakable bridges 14, which are configured to break during initial opening of the pouring element 1 and to avoid an unintentional initial opening of the pouring element 1.

The breakable bridges 14, the anchor element 8 and the grip element 7 are connected to a rim portion 15 of the flip cap 3, which is positioned circumferentially with respect to the pouring tube 5 and the closure element 6. The rim portion 15 can form the outer section of the closure element 6. In addition, next to the rim portion 15 the closure element 6 comprises a rib portion 16 circumferentially to an inner part 17 of the closure element 6 at least essentially parallel to the fastening flange 4 and/or at least perpendicular to the pouring tube 5. Further, the closure element 6 engages with the inner part 17 and the rib portion 16 into the pouring tube 5. The thickness of the rib portion 16 is reduced both adjacent to the grip portion 7 and adjacent to the anchor element 8 in a direction parallel to the fastening flange 4. As a result, flip cap 3 can be bent more easily during opening of the pouring element 1.

However, the rib portion 16 could be dispensed with. This is especially the case if the closure element 6 would be connected only to the upper face of the pouring tube 5 facing away from the fastening flange 4.

The pouring tube 5 defines a central longitudinal axis A which intersects closure element 6 of the flip cap 3 centrally at an injection point 18 being created during injection molding the pouring element 1 by injecting thermoplastic material into the mold to form the pouring element 1. The central longitudinal axis A extends at least essentially perpendicular to the fastening flange 4 of the pouring element 1. The closure element 6 has a reduced thickness at the injection point 18 and in a thinned-out section 19 in the front half 9 of the closure element 6. In addition, an intermediate section 20 is provided in the front half 9 of the closure element 6, which connects the thinned-out 19 section and the stabilization section 21. Said stabilization section 21 essentially covers the rear half 10 of the closure element 6 as well as part of the front half 9 of the closure element 6. The thickness of the intermediate section 20 is about 75% of the thickness of the stabilization section 21, whereas the thickness of the thinned-out section 19 is 80 to 85% of the thickness of the intermediate section 20.

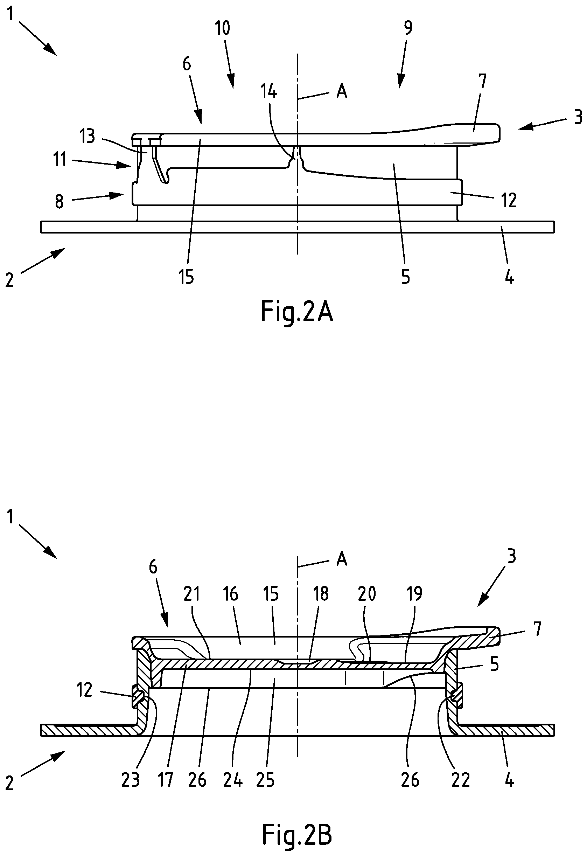

In Fig. 2A-B the pouring element 1 is shown in a side view and in a respective sectional view with the flip cap 3 in a closed state. The breakable 14 bridges still connect the holding ring 12 to the rim portion 15 of the flip cap 3 extending outwardly with respect to the pouring tube 5. The rim portion 15 is also connected via hinge member 11 to the holding ring 12, which positively engages with a circumferential engagement rib 22 form the outside into a recess 23 on the outside of the pouring tube 5.

As an alternative the holding ring 12 could be positively held beneath a rib member on the outside of the pouring tube 5. In such a case the engagement rib 22 could also be split into multiple circumferentially distributed sections.

The closure element 6 of the flip cap 3 has a flat lower surface 24 at the inner part 17 of the closure element 6 around which a circumferential wall section 25 is provided. The circumferential wall section 25 extends downward from the inner part 17 of the closure element 6. However, the circumferential wall section 25 is shorter adjacent to the grip portion 7 than in other parts of the closure element 6. The rib portion 16 of the closure element 6 extends upwardly from the inner part 17 of the closure element 6 at opposite side of the circumferential wall section 25. The rib portion 16 and the circumferential wall section 25 are aligned to each other, at least in the embodiment shown and, thus, preferred. The closure element 6 is connected to the pouring tube 5 by a breakable liquid tight connecting portion 26, which breaks when the pouring element 1 is opened for the first time. The connecting portion 26 is provided in this preferred pouring element in the pouring tube 5. The breakable connection 26 can be provided in form of a circumferential line or include the whole area at which the closure element 6 and the pouring tube 5 abut. Also everything in between is possible.

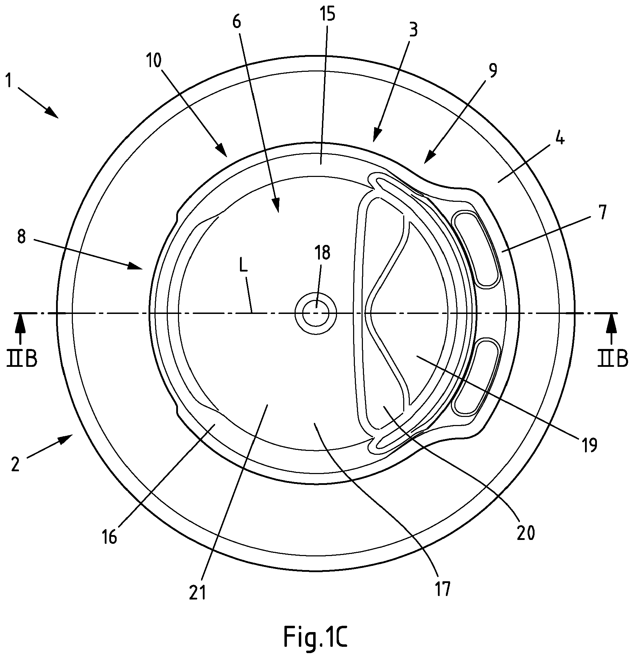

The sectional view shown in Fig. 2B is drawn along a connecting line L which was shown in Fig. 1C and appears straight when viewed from above. Thus, it can be referred to as a straight connecting line. The connecting line is extending from the grip portion 7 to the anchor element 8, intersecting the central longitudinal axis A of the pouring tube 5 as well as the center of the closure element 6 at the injection point 18. The connecting line L further intersects starting from the grip portion 7: The rim portion 15 of the flip cap 3 adjacent the grip portion 7, the rib portion 16 of the closure element 6 adjacent the grip portion 7, the thinned-out section 19, the intermediate section 20, the stabilization section 21, the rib portion 16 of the closure element 6 adjacent to the anchor element 8 and the rim portion 15 of the closure element 6 adjacent to the anchor element 8 one after the other. The thickness of the closure element 6 is the smallest in the thinned-out section 19. The thickness of the intermediate section 20 exceeds the thickness of the thinned-out section 19, and the thickness of the stabilization section 21 exceeds the thickness of the intermediate section 20 but is about equal to the thickness of the rim portion 15.

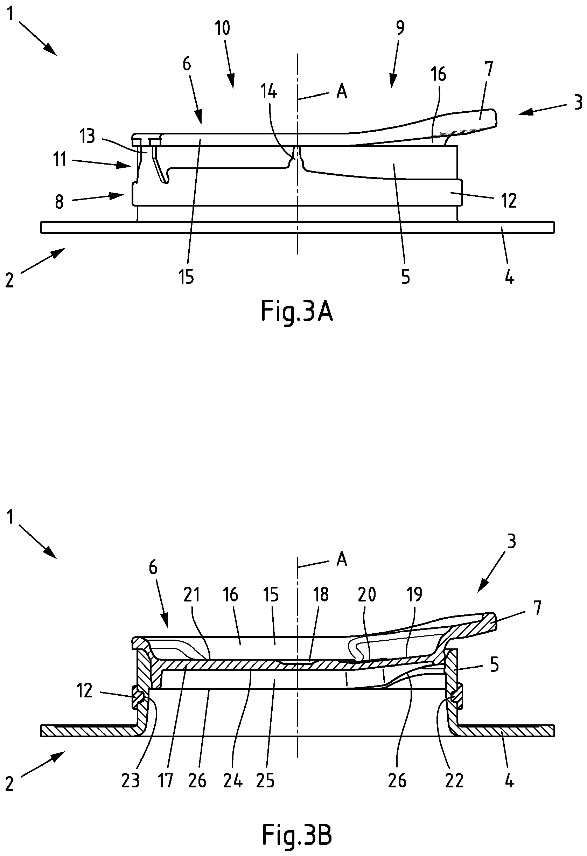

In Fig. 3A-B the pouring element 1 is shown during the early stages of the opening process. The grip portion 7 is slightly pulled upward, so that the thinned-out section 19 is slightly bent backwards, so that the connecting portion 26 is broken next to the grip portion 7, where the mechanical stress is focused due to bending of the thinned-out section 19. However, the majority of the closure element 6 still sits in the pouring tube 5.

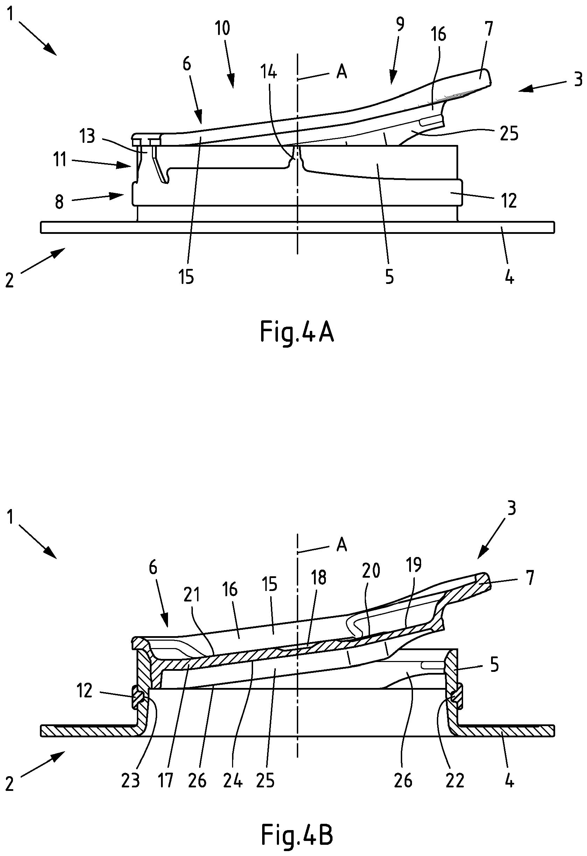

In Fig. 4A-B the pouring element 1 is further opened. The grip portion 7 is pulled further up and towards the rear of the closure element 6. The thinned-out sections 19 still allow localized bending of the closure element 6 so that the front half 9 of the closure element 6 is already peeled out of the pouring tube 5. The connection portion 26 is already broken over most of its length. Only at the rear end next to the anchor element 8 the connection portion 26 is still unbroken. At the front side the closure element 6 is already pulled out of the pouring tube 5. Further, the breakable bridges 14 between the anchor element 8 and the rim portion 15 of the flip cap 3 are broken as well.

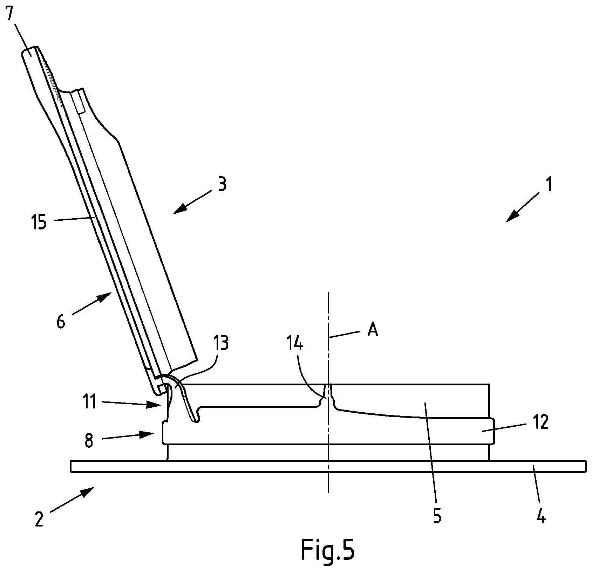

In Fig. 5 the pouring element 1 is in an open state, with the connecting portion 26 fully broken and the closure element 6 fully pulled out of the pouring tube 5. The closure element 6 is connected only via anchor element 8 to the spout body 2, more precisely to the pouring tube 5. Further, the closure element 6 is swiveled about the hinge member 11 backwards in order to give way for the content to be poured out without contacting the closure element 6.

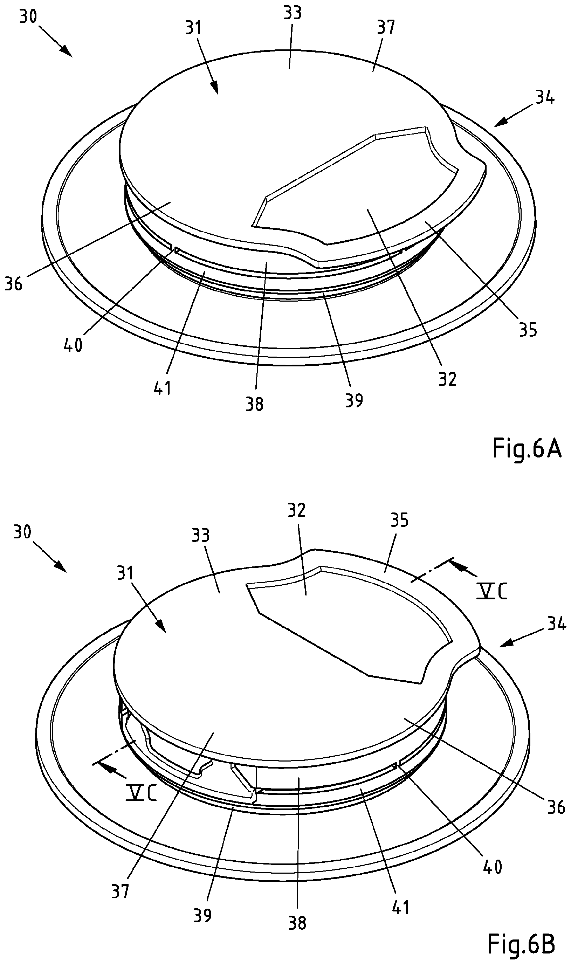

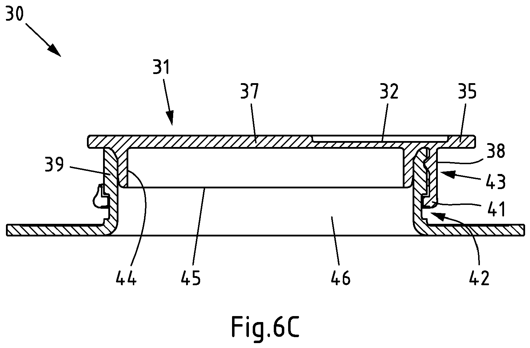

In Fig. 6A-C a different pouring element 30 is shown. The main difference is that there is no connection portion which needs to be broken during opening. The closure element 31 also comprises only a thinned-out section 32 and a stabilization section 33. No intermediate section is present. The thickness of the thinned-out section 32 is approximately 50% of the thickness of the stabilization section 33. The thinned-out section 32 is partly arranged in the front half 34 of the closure element 31 and extends from there into a grip portion 35, facilitating bending of the front part of the closure element 31 in the first stages of an initial opening of the pouring element 30. From a rim portion 36 of the flip cap 37 an outer wall section 38 extends downwardly, which covers the outside wall of respective part of the pouring tube 39. The rim portion 36 can at least be part of the closure element 31. At the lower end of said outer wall section 38 breakable bridges 40 are provided between the outer wall section 38 and a holding ring 41 positioned beneath the outer wall section 38 of the flip cap 37. The breakable bridges 40 are configured to be broken during opening of the pouring element 30 for the first time, with the one below the grip portion 35 breaking almost immediately when starting the opening process.

The holding ring 41 is positively held in an outer circumferential recess 42 of the pouring tube 39 which tethers the flip cap 37 to the pouring element. The outer wall section 38 is held in another outer recess 43 of the pouring tube 39, at least at a front end of the flip cap 37 under the grip portion 35. This gives a haptic and auditory signal to the customer when the flip cap 35 is opened or reclosed. Either of these recesses could be substituted by respective rib elements. The flip cap 35 also comprises a circumferential wall section 44 extending downwards from the closure element 31 next to the rim portion 36. The circumferential wall section 44 provides a liquid-tight sealing function.

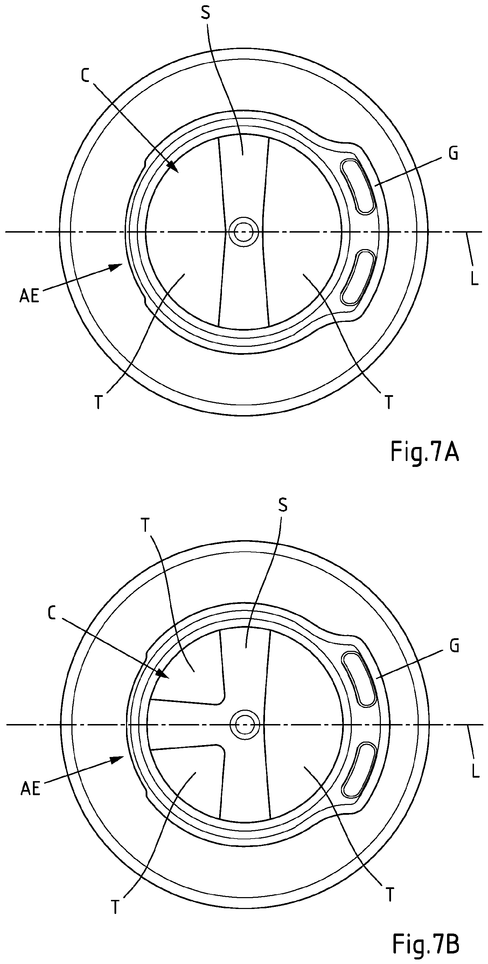

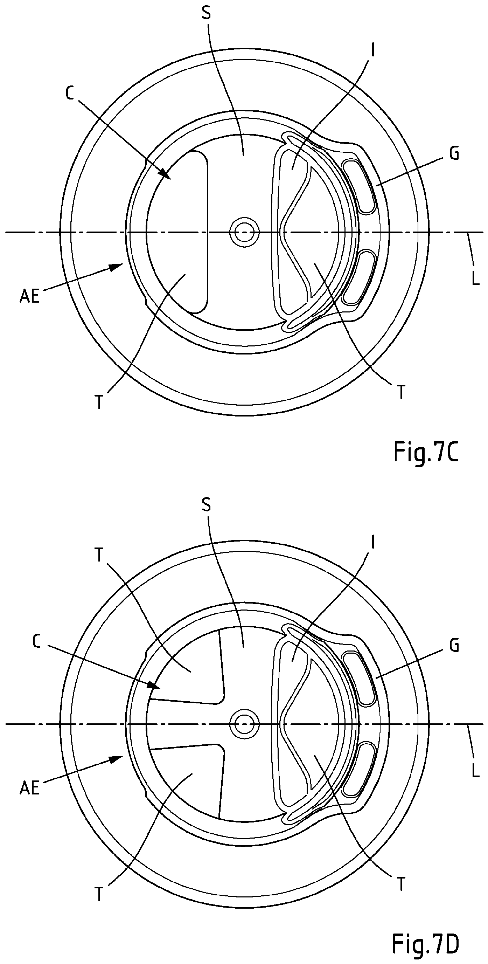

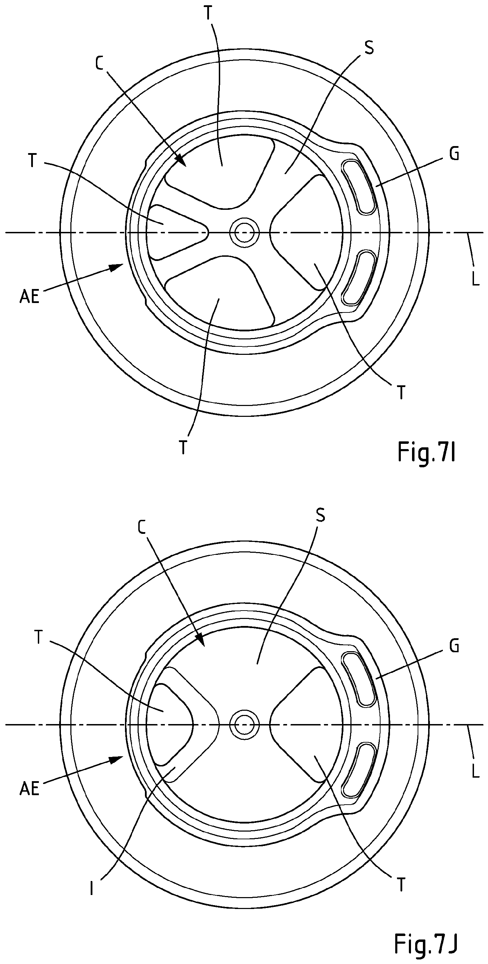

In Fig. 7A-K further pouring elements are shown in top views, whereby only the closure elements differ from each other. The closing element C shown in Fig 7A comprises a beam like stabilization section S intersecting a central area of the closure element and extending perpendicular to a connecting line L connecting the grip portion G and the anchor element AE. The stabilization section S shown in Fig. 7B is T-shaped, whereby the additional leg extends from the central area in the direction of the anchor element AE. The legs of the stabilization section S separate three separate thinned-out sections T from each other. The closure element C shown in Fig, 7C comprises a beam like stabilization section S intersecting a central area of the closure element C and extending perpendicular to a connecting line L connecting the grip portion G and the anchor element AE. In the direction of the grip portion G the stabilization section S transitions into an intermediate section I shaped in an 8-like form which in turn transitions into a thinned-out section T in said direction. In the direction of the anchor element AE the stabilization section S directly transitions into another thinned-out section T. The closure element C shown in Fig. 7D is similar to the closure element C shown in Fig. 7C except for the T-shaped stabilization section S, so that three instead of two separate thinned-out sections T are provided.

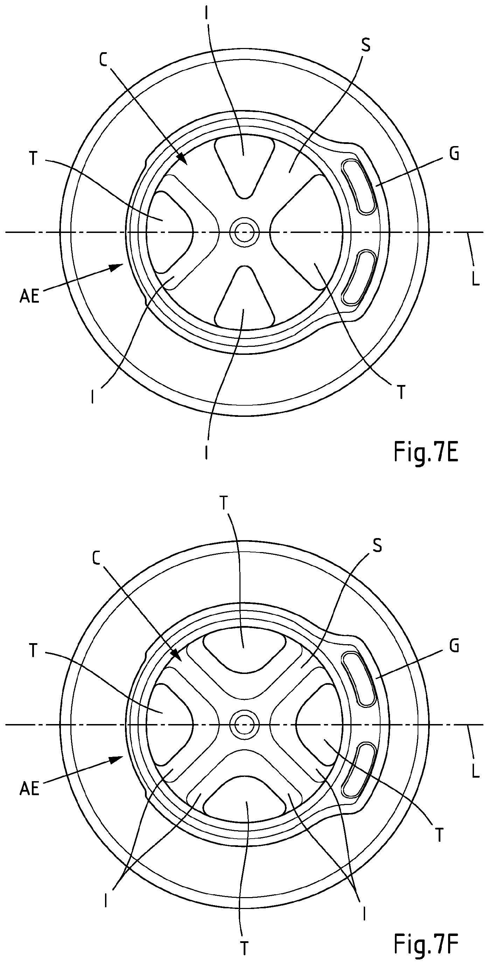

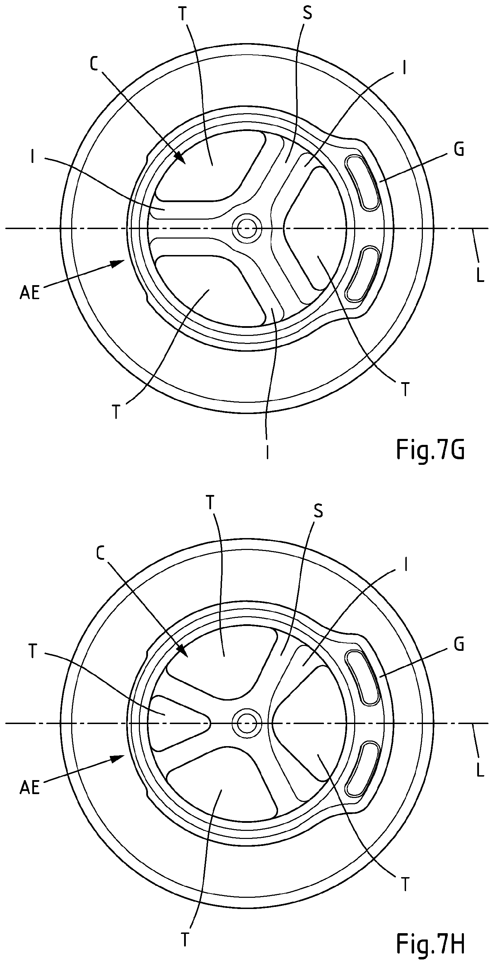

In Fig. 7E a closure element C having an X-shaped stabilization section S. In the embodiment shown at one side of the stabilization section S the stabilization section S transitions into an intermediate section I which in turn transitions into a thinned-out section T. Two further intermediate sections I are provided, on opposite lateral sides of the stabilization section S, and a thinned-out section T towards the grip portion G. The closure element C shown in Fig, 7F also has an X-shaped stabilization section S. However, the legs of the stabilization section S are more narrow and the stabilization section S transitions on all four sides into intermediate sections I, which in turn transition into separate thinned-out sections S in each case. The closure element C of Fig. 7G is similar to the closure element C in Fig. 7F but has an V-shaped stabilization section. On all three sides the stabilization section S transitions into Intermediate sections I which in turn transition into separate thinned-out sections T. Thus, three intermediate sections I as well as three thinned-out sections T are present. In Fig. 7H a closure element C is shown which is similar to the closure element C shown in Fig. 7E. However, the two legs of the stabilization section S pointing to the front side of the closure element C are further apart than the opposite two legs pointing to the rear side of the closure element C. Only on the front side of the stabilization section S an intermediate section I is provided separating a thinned-out section T from the stabilization section S. In total four thinned-out sections T are provided each separated by the stabilization section S from each other. The closure element C shown in Fig. 7I is similar to the closure element C shown in Fig. 7H except for the fact that the intermediate section I has been dispensed with.

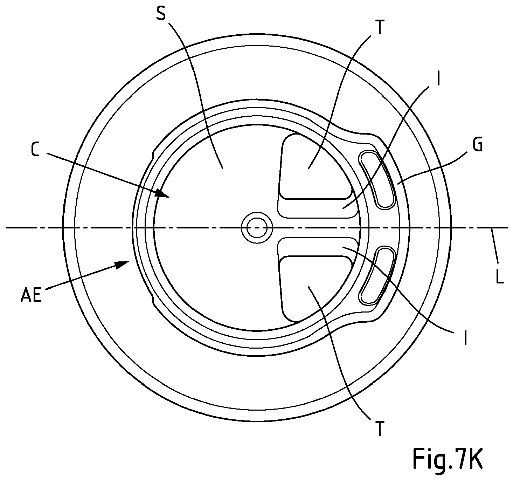

In Fig., 7J a closure element C is shown which only has two thinned-out sections T. The thinned-out sections T are arranged at the front side and the rear side respectively. Further, the thinned-out sections T have triangular-like shapes. The thinned out section T at the rear side is surrounded by a V-shaped intermediate section I. The two thinned-out sections T of the closure element C shown in Fig. 7K are arranged in the front half of the closure element C and separated from each other by two intermediate sections I each transitioning into part of the stabilization section S which further encloses the rear half of the closure element C. The thinned-out sections T have triangular-like shapes. Please note that in general certain features of different embodiments described with respect to the drawings can be combined in multiple ways. Specifically, the variations of sections described regarding Fig. 7A to 7K are applicable independently of the exact embodiment of the rest of the pouring element.

### List of reference numerals

- 1: pouring element
- 2: spout body
- 3: flip cap
- 4: fastening flange
- 5: pouring tube
- 6: closure element
- 7: grip portion
- 8: anchor element
- 9: front half
- 10: rear half
- 11: hinge member
- 12: holding ring
- 13: hinge
- 14: breakable bridge
- 15: rim portion
- 16: rib portion
- 17: inner part
- 18: injection point
- 19: thinned-out section
- 20: intermediate section
- 21: stabilization section
- 22: engagement rip
- 23: recess
- 24: lower surface
- 25: circumferential wall section
- 26: connecting portion
- 30: pouring element
- 31: closure element
- 32: thinned-out section
- 33: stabilization section
- 34: front half
- 35: grip portion
- 36: rim portion
- 37: flip cap
- 38: outer wall section
- 39: pouring tube
- 40: breakable bridges
- 41: holding ring
- 42: recess
- 43: recess
- 44: circumferential wall section
- 46: inner face
- A: central longitudinal axis
- AE: anchor element
- C: closure element
- G: Grip portion
- I: intermediate section
- L: connecting line
- S: stabilization section
- T: thinned-out section

## Claims

1. Pouring element (1,30) for cardboard/plastic composite packages comprising a spout body (2),and a flip cap (3,37);
- wherein the spout body (2) comprises a circumferential fastening flange (4) for fastening the spout body (2) to the composite package and a pouring tube (5,39) extending from the fastening flange (4) and surrounding a longitudinal axis (A);
- wherein the flip cap (3,37) comprises a closure element (6,31,C) closing the pouring tube (5,39) in a closed state of the pouring element (1,30),
- wherein the flip cap (3,37) comprises an anchor element (8,AE) connecting to a rear side of the closure element (6,31,C) and configured to permanently attach the flip cap (3,37) to the spout body (2) in a swiveling manner, and
- wherein the flip cap (3,37) comprises a grip portion (7,35,G) assigned to a front side of the closure element (6,31,C), opposite the rear side regarding the longitudinal axis (A), for gripping the flip cap (3,37) for opening of the pouring element (1,30),
**characterized in that,**
- the closure element (6,31,C) comprises a stabilization section (21,33,S) and at least one thinned-out section (19,32,T) arranged between the stabilization section (21,33,S) and the grip portion (7,35,G) and/or the anchor element (8,AE), wherein the axial thickness of the thinned-out section (19,32,T) is not more than 90% of the axial thickness of the stabilization section (21,33,S) of the closure element (6,31,C).

2. Pouring element according to claim 1,
**characterized in that,**
the thickness of at least one thinned-out section (19,32,T) is not more than 75%, preferably not more than 50%, of the thickness of the stabilization section (21,33,S).

3. Pouring element according to claim 1 or 2,
**characterized in that,**
the thickness of at least one intermediate section (20,I) of the closure element (6,31,C) arranged between a thinned-out section (19,32,T) and the stabilization section (21,33,S) is not more than 90%, preferably not more than 85%, in particular not more than 75% of the thickness of the stabilization section (20,I) (21,33,S) and **in that** the thickness of said thinned-out section (19,32,T) of the closure element (6,31,C) is not more than 90%, preferably not more than 80%, in particular not more than 65% of the thickness of the at least one intermediate section (20,I).

4. Pouring element according to claim 3,
**characterized in that,**
the at least one thinned-out section (19,32,T), the intermediate section (20,I) and the at least one stabilization section (21,33,S) are arranged so that a, preferably straight, connecting line (L) extending from the grip portion (7,35,G) to the anchor element (8,AE) intersects the thinned-out section (19,32,T), the intermediate section (20,I) and the stabilization section (21,33,S) one after the other.

5. Pouring element according to claim 4,
**characterized in that,**
the connection line (L) intersects the longitudinal axis (A) in the stabilization section (21,33,S) or in the intermediate section (20,I).

6. Pouring element according to any one of claims 1 to 5,
**characterized in that,**
the closure element (6,31,C) has a circumferential outer rim portion (15,36) with at least essentially constant thickness, which is greater than the thickness of the thinned-out portion and/or at least essentially similar to the thickness of the stabilization section (21,33,S).

7. Pouring element according to any one of claims 1 to 6,
**characterized in that,**
the stabilization section (21,33,S) extends to both outer edges of the closure element (6,31,C) arranged between the front side and rear side.

8. Pouring element according to any one of claims 1 to 7,
**characterized in that,**
all thinned-out sections (19,32,T) combined make up 10% to 50%, preferably 20% to 35%, of the total top surface area of the closure element (6,31,C) and/or **in that** the intermediate section (20,I) or the total intermediate section (20,I) makes up 10% to 35%, preferably 10% to 25%, in particular 10% to 15% of the total top surface area of the closure element (6,31,C).

9. Pouring element according to any one of claims 1 to 8,
**characterized in that,**
the lower surface of the closure element (6,31,C) closing the pouring tube (5,39) is at least essentially plane.

10. Pouring element according to any one of claims 1 to 9,
**characterized in that,**
the closure element (6,31,C) has a circumferential wall section (25,44) extending downwards into the pouring tube (5,39) such that the outer side of the circumferential wall section (24,44) abuts the pouring tube (5,39) on its inside.

11. Pouring element according to any one of claims 1 to 10,
**characterized in that,**
the flip cap (3,37) is circumferentially connected to the spout body (2) by a breakable, liquid-tight connection portion (26) configured to break during initial opening of the pouring element (1,30).

12. Pouring element according to any one of claims 1 to 11,
**characterized in that,**
the anchor element (8,AE) comprises a hinge member (11) for swiveling the closure element (6,31,C) around a stable hinge axis.

13. Pouring element according to any one of claims 1 to 12,
**characterized in that,**
the anchor element (8,AE) comprises an holding ring (41) surrounding the pouring tube (5,39).

14. Pouring element according to any one of claims 1 to 13,
**characterized in that,**
the anchor element (8,AE) is attached directly to the spout body (2) and preferably the spout body (2) and the flip cap (3,37) are made in a single piece.

15. Pouring element according to any one of claims 1 to 14,
**characterized in that,**
the grip portion (7,35,G) comprises a pulling ring that is attached at the front side of the closure element (6,31,C).
